# DEMANDE DE BREVET EUROPEEN

(11) **EP 0 985 337 A1**
(43) Date de publication de la demande: **15.03.2000**
(21) Numéro de dépôt: 99440244.4
(22) Date de dépôt: 07.09.1999
(51) Int. Cl.: A01B 63/10, A01B 73/00

(54) **Dispositif de contrôle et de blocage du relevage d'un attelage d'outils agricoles tractés et notamment d'un attelage de deux points**

(30) Priorité: 07.09.1998 FR 9811280
(71) Demandeur: Hydrokit, 85170 Le Poire sur Vie (FR)
(72) Inventeur: La désignation de l'inventeur n'a pas encore été déposée
(74) Mandataire: Arbousse-Bastide, Jean-Claude Philippe

(57) **Abrégé**

Dispositif de contrôle et de blocage du relevage d'un attelage d'outils agricoles tractés et notamment d'un attelage deux points (1) du type comprenant d'une part deux barres inférieures (10), articulées chacune par l'une de ses extrémités à l'engin tracteur (13) et par l'autre extrémité à l'outil (12) à fixer au tracteur (13), et d'autre part des bielles de relevage actionnées par un vérin de relevage (2) pour permettre le réglage de la hauteur de l'attelage en en levant ou en abaissant les barres inférieures (10).

Il se caractérise essentiellement en ce qu'il comprend au moins un vérin de blocage hydraulique (3) dont la tige (30) est déplacée corrélativement au déplacement vertical de l'attelage (1) et en ce que la commande du blocage de ce dernier au moyen dudit vérin (3) est pilotée par un moyen de détection des déplacements verticaux de l'attelage relié à un circuit de commande (4) et/ou par un moyen de détection (6) du freinage du tracteur (12).

## Description

La présente invention a pour objet un dispositif de contrôle et de blocage du relevage d'un attelage d'outils agricoles tractés et notamment d'un attelage deux points.

Les attelages deux points actuels destinés à fixer un outil agricole à un engin tracteur comprennent d'une part deux barres inférieures, ou barres de traction, articulées chacune par l'une de ses extrémités à l'engin tracteur et par l'autre extrémité, au moyen d'une cheville d'attelage, à l'outil à fixer audit tracteur ; et d'autre part des bielles de relevage permettant à l'utilisateur de régler la hauteur de l'attelage à l'aide d'au moins un vérin de relevage hydraulique commandés par l'utilisateur, qui permettra de lever ou d'abaisser les barres inférieures.

La structure de ces attelages permet d'adapter la liaison mécanique entre l'engin tracteur et les divers outils en fonction des différentes hauteurs d'attelage que souhaite l'utilisateur afin d'obtenir la meilleure assiette possible dans les conditions de travail et d'augmenter la garde au sol en circulation suivant que le tracteur se déplace dans un espace de travail ou sur une route.

Toutefois, un des problèmes des attelages actuels est leur homologation pour rouler sur les routes. En effet, pour qu'un attelage puisse être tracté sur une route, il faut qu'il soit rendu rigide, notamment lors du freinage ou d'autres sollicitations dynamiques, afin d'empêcher qu'il ne se relève et ne provoque le décrochage de l'outil tracté.

La présente invention a pour but d'offrir une solution à ce problème en proposant un dispositif qui permet de contrôler et le bloquer le relevage de l'attelage dans la position spécifiée pour la circulation sur route tout en autorisant une rigidité suffisante dans son fonctionnement en travail.

Le dispositif de contrôle du relevage d'un attelage selon l'invention comprend d'une part deux barres inférieures, articulées chacune par l'une de ses extrémités à l'engin tracteur et à par l'autre extrémité à l'outil à fixer audit tracteur, et d'autre part des bielles de relevage actionnées par au moins un vérin de relevage pour permettre le réglage de la hauteur de l'attelage en levant ou en baissant les barres inférieures; et il se caractérise essentiellement en ce qu'il comprend au moins un vérin de blocage hydraulique dont la tige est déplacée corrélativement au déplacement vertical de l'attelage et en ce que la commande du blocage de l'attelage au moyen dudit vérin est pilotée par un moyen de détection des déplacements verticaux de l'attelage relié à un circuit de commande et/ou par un moyen de détection du freinage du tracteur.

Selon une caractéristique additionnelle de l'invention le vérin de blocage hydraulique est le vérin de relevage.

Selon une caractéristique additionnelle de l'invention le moyen de détection des déplacements verticaux de l'attelage est un vérin hydraulique dont le piston est déplacé par les mouvements verticaux de l'attelage, le vérin de blocage étant actionné en fonction des variations de la pression dans ledit vérin de détection, par rapport à une valeur seuil.

Selon une autre caractéristique additionnelle de l'invention le vérin de détection est le vérin de relevage de l'attelage.

Dans un premier mode de réalisation de l'invention le circuit de commande comporte une sortie reliée par un conduit hydraulique à la chambre du vérin de blocage, une première entrée reliée à une source de pression hydraulique, et une deuxième entrée permettant un retour du fluide vers le réservoir, lesdites entrées étant reliées à la sortie dudit circuit de commande par l'intermédiaire d'un distributeur à tiroir à deux positions commandé en déplacement par les variations de la pression de la chambre du vérin de détection. Le distributeur à tiroir est commandé en déplacement d'une part, lorsque la valeur de la pression mesurée dans le vérin de détection devient inférieur à la valeur seuil, dans une position permettant la connexion de la sortie sur la première entrée via une vanne anti-retour bloquant le relevage de l'attelage et d'autre part, lorsque la valeur de la pression mesurée dans le vérin de détection est supérieure à la valeur seuil, dans une position permettant la connexion de la sortie sur la deuxième entrée, autorisant le relevage de l'attelage.

Dans un deuxième mode de réalisation du dispositif selon l'invention la première entrée du circuit de commande est reliée au distributeur par l'intermédiaire d'un tiroir à deux positions commandé en déplacement par un circuit de détection du freinage du tracteur, en sorte que dans une position du tiroir correspondant à une détection du freinage, ledit tiroir laisse passer le fluide entre ladite première entrée et la sortie, et dans l'autre position, sans détection de freinage, celui-ci soit bloquant dans le sens de la sortie vers ladite première entrée.

Selon une autre caractéristique additionnelle de l'invention la deuxième entrée du circuit de commande est reliée au distributeur via un clapet permettant, dans le cas où la sortie est reliée à la deuxième entrée, de maintenir une certaine pression de fluide dans le vérin de blocage.

Les avantages et les caractéristiques de la présente invention ressortiront plus clairement de la description qui suit et qui se rapporte au dessin annexé, étant entendu que cette description ne présente aucun caractère limitatif vis à vis de l'invention.

Dans le dessin annexé :
- la figure 1 représente une vue schématique du dispositif selon l'invention dans un premier mode de réalisation.
- la figure 2 représente une vue schématique du dispositif selon l'invention dans un deuxième mode de réalisation.
- la figure 3 représente le schéma électrique du dispositif de détection du freinage du tracteur.

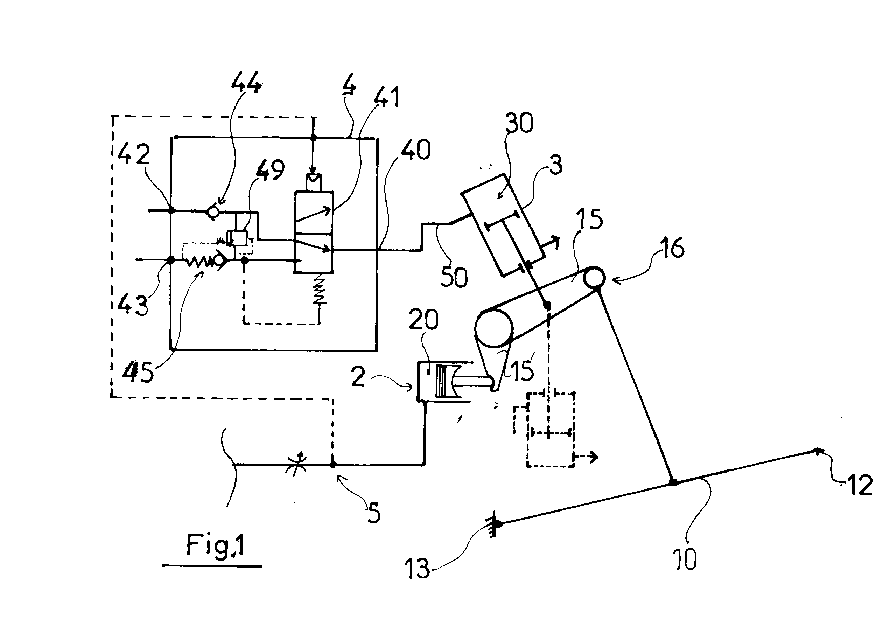

Si on se réfère à la figure 1 on peut voir un attelage deux points 1 comprenant d'une part deux barres inférieures 10, dont une seule est visible sur la figure, chacune étant articulée par ses extrémités à un outil 12 et à un tracteur 13, non représentés, et d'autre part des bielles de relevage 15,15', commandées en pivotement par un vérin de relevage simple effet 2, qui peut être également un vérin double effet, formant un bras de relevage 16 destiné à transmettre un effort aux barres inférieures 10 pour les lever ou les abaisser en vue du réglage de la hauteur de l'attelage selon les conditions de fonctionnement.

Le dispositif selon l'invention, qui permet de contrôler la mobilité verticale de l'attelage 1 et de bloquer son relevage, comporte un vérin simple effet 3 disposé au-dessus du bras de relevage 16 et dont la tige 30 est articulée par son extrémité libre à la bielle de relevage 15 de manière à pouvoir bloquer le pivotement du bras de relevage 16 vers le haut. La chambre arrière 31 du vérin 3 est alimentée en fluide sous pression grâce à un conduit 50 connecté à la sortie 40 d'un circuit de commande 4 de manière à pouvoir exercer une poussée vers le bas sur le bras 16 pour bloquer le relevage de l'attelage 1.

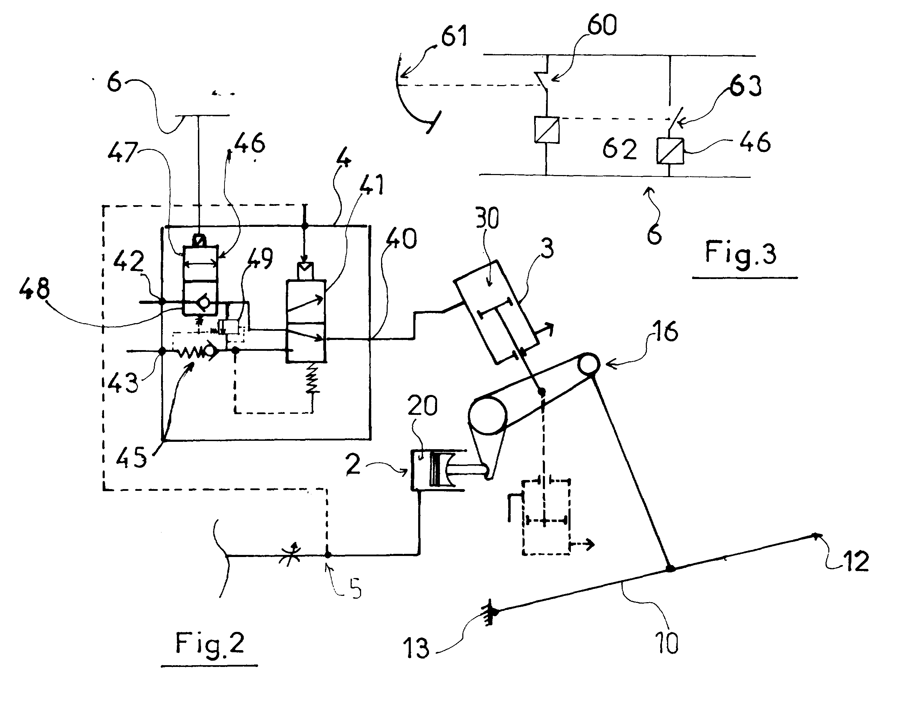

Le vérin 3 pourrait également être disposé sous le bras de relevage 16, comme on peut le voir tel que représenté en traits interrompus sur les figures 1 et 2, il serait alors alimenté en fluide sous pression dans sa chambre avant de manière à bloquer par traction le bras 16 en pivotement vers le haut.

Le circuit de commande hydraulique 4 comprend un distributeur à tiroir 41 à deux positions activé dans l'une ou l'autre position lors d'un changement de la pression, mesurée par un moyen de mesure 5, dans la chambre arrière 20 du vérin de relevage 2 c'est-à-dire d'une part, lorsque la valeur de la pression mesurée est inférieure à une valeur seuil Ps, dans une position permettant la connexion de la sortie 40 avec une entrée d'alimentation basse pression 42 via une vanne anti retour 44, et d'autre part, lorsque la valeur de la pression est supérieure à la valeur seuil Ps, dans une position permettant la connexion de la sortie 40 via une vanne anti-retour 45 reliée à une autre entrée 43 du circuit 4 connectée au réservoir, non représenté.

La vanne anti-retour 44 permet au fluide sous pression de circuler de l'entrée 42 vers la sortie 40 et lui interdit le passage dans l'autre sens, ce qui permet de maintenir le fluide dans le vérin 3 sous une pression bloquant le relevage de l'attelage.

La vanne anti-retour 45 permet au fluide de circuler de la sortie 40 du circuit 4 vers l'entrée 42 et lui interdit le passage dans l'autre sens, ce qui permet de maintenir une certaine pression de fluide dans la chambre 31 du vérin 3.

Ainsi lorsque l'attelage 2 se relève du fait d'un freinage de l'engin tracteur 13 sur une route ou du fait d'une autre sollicitation dynamique, le bras de relevage 16 pivote en tirant sur la tige du vérin 20 du vérin de relevage 2, ce qui a pour effet de faire baisser la pression du fluide contenu dans la chambre arrière 22 du vérin. Lorsque la pression devient inférieure à la pression de seuil le déplacement du distributeur 41 est commandé dans une position connectant la sortie 40 avec l'entrée 42 du circuit 4, bloquant le relevage de l'attelage.

Si on se réfère maintenant à la figure 2 on peut voir que dans un mode de réalisation préférentiel de l'invention la vanne anti-retour 44 est remplacée par un tiroir à deux positions 46 piloté électriquement par un circuit de détection électrique 6, représenté sur la figure 3, qui commande le déplacement du tiroir 44, lors d'un freinage du tracteur, depuis une position de travail 47 où il est passant jusque dans une position de repos 48 où il bloque le fluide dans le sens de la sortie 40 vers l'entrée 42 où il reçoit sa pression.

Si on se réfère à la figure 3 on peut voir que le circuit de détection 6 comprend un interrupteur 60 commandé en fermeture lorsque le conducteur du tracteur agit sur la pédale de frein 61, ce qui a pour effet d'exciter un relai 62 qui commande alors l'ouverture d'un interrupteur 63 coupant l'alimentation électrique V de la commande du tiroir 44 en position de travail, l'amenant dans sa position de repos en bloquant le fluide en retour afin de maintenir une pression de blocage du relevage de l'attelage.

On notera que la détection du freinage peut également être effectuée au niveau de la commande d'allumage des feux de stop.

Dans ces deux modes de réalisation on peut voir qu'un clapet 49 est placé en parallèle sur les entrées 42 et 43 du circuit de commande 4 entre le distributeur 41 et les différents éléments 44,45 pour le premier mode de réalisation et 45,46 pour le deuxième mode de réalisation connectés entre les entrées 42 et 43 et le distributeur 41. Ce clapet permet un bon fonctionnement du dispositif selon l'invention et notamment un bon contrôle lors de la descente du bras de relevage lorsque la chambre active du vérin de blocage 3 est purgée.

En outre des essais ont montré qu'une pression de la valeur seuil Ps égale à 2 bars et une pression à l'entrée 42 du circuit de commande 4 permettrait d'obtenir un bon fonctionnement du dispositif avec les attelages actuels par rapport aux conditions de fonctionnement dans lesquelles ces derniers sont utilisés, en répondant parfaitement aux normes de sécurité en vigueur.

## Revendications

1. Dispositif de contrôle et de blocage du relevage d'un attelage d'outils agricoles tractés et notamment d'un attelage deux points (1) du type comprenant d'une part deux barres inférieures (10), articulées chacune par l'une de ses extrémités à l'engin tracteur (13) et par l'autre extrémité à l'outil (12) à fixer au tracteur (13), et d'autre part des bielles de relevage actionnées par au moins un vérin de relevage (2) pour permettre le réglage de la hauteur de l'attelage en en levant ou en abaissant les barres inférieures (10); et il se caractérise essentiellement en ce qu'il comprend au moins un vérin de blocage hydraulique (3) dont la tige (30) est déplacée corrélativement au déplacement vertical de l'attelage (1) et en ce que la commande du blocage de ce dernier au moyen dudit vérin (3) est pilotée par un moyen de détection des déplacements verticaux de l'attelage relié à un circuit de commande (4) et/ou par un moyen de détection (6) du freinage du tracteur (12).

2. Dispositif selon la revendication 1, caractérisé en ce que le vérin de blocage hydraulique est le vérin de relevage.

3. Dispositif selon la revendication 1 ou la revendication 2 caractérisé en ce que le moyen de détection des déplacements verticaux de l'attelage est un vérin hydraulique dont le piston est déplacé par les mouvements verticaux de l'attelage, le vérin de blocage étant actionné en fonction des variations de la pression dans ledit vérin de détection, par rapport à une valeur seuil Ps.

4. Dispositif selon la revendication 3 caractérisé en ce que le vérin de détection est le vérin de relevage (2) de l'attelage (1).

5. Dispositif selon la revendication 3 ou 4 caractérisé en ce que le circuit de commande (4) comporte une sortie (40) reliée par un conduit hydraulique (50) à la chambre avant ou arrière (30) du vérin de blocage (3), une première entrée reliée à une source de pression hydraulique, et une deuxième entrée (43) permettant un retour du fluide vers le réservoir, lesdites entrées (42,43) étant reliées à la sortie (40) dudit circuit de commande (4) par l'intermédiaire d'un distributeur à tiroir (41) à deux positions commandé en déplacement par les variations de la pression de la chambre (20) du vérin de détection (2), ledit distributeur à tiroir (41) étant commandé en déplacement d'une part, lorsque la valeur de la pression mesurée dans le vérin de détection devient inférieur à la valeur seuil, dans une position permettant la connexion de la sortie (40) sur la première entrée (42) via une vanne anti-retour bloquant le relevage de l'attelage et d'autre part, lorsque la valeur de la pression mesurée dans le vérin de détection est supérieure à la valeur seuil, dans une position permettant la connexion de la sortie sur la deuxième entrée, autorisant le relevage de l'attelage.

6. Dispositif selon la revendication 3 ou 4 caractérisé en ce que le circuit de commande (4) comporte une sortie (40) reliée par un conduit hydraulique (50) à la chambre avant ou arrière (30) du vérin de blocage (3), une première entrée (42) reliée à une source de pression hydraulique, et une deuxième entrée (43) permettant un retour du fluide vers le réservoir, lesdites entrées (42,43) étant reliées à la sortie (40) dudit circuit de commande (4) par l'intermédiaire d'un distributeur à tiroir (41) à deux positions commandé en déplacement par les variations de la pression de la chambre (20) du vérin de détection (2), ledit distributeur à tiroir (41) étant commandé en déplacement d'une part, lorsque la valeur de la pression mesurée dans le vérin de détection devient inférieur à la valeur seuil, dans une position permettant la connexion de la sortie (40) sur la première entrée (42) via un tiroir à deux positions (46) piloté par un circuit de détection (6) du freinage du tracteur (12), en sorte que dans une position dudit tiroir (46) correspondant à une détection du freinage, il laisse passer le fluide entre ladite première entrée (42) et la sortie (40) du circuit de commande (4) et dans l'autre position, sans détection de freinage, il soit bloquant dans le sens de la sortie (40) didit circuit de commande (4) vers ladite première entrée (42), et d'autre part, lorsque la valeur de la pression mesurée dans le vérin de détection est supérieure à la valeur seuil, dans une position permettant la connexion de la sortie (40) sur la deuxième entrée (43), autorisant le relevage de l'attelage (1).

7. Dispositif selon l'une quelconque des revendications 4 à 6 caractérisé en ce que la deuxième entrée (42) du circuit de commande (4) est reliée au distributeur (41) via un clapet (45) permettant, dans le cas où la sortie (40) du circuit de commande est reliée à la dite deuxième entrée (42), de maintenir une certaine pression de fluide dans le vérin de blocage (3).

8. Dispositif selon l'une quelconque des revendications 5 à 7 caractérisé en ce qu'un clapet (49) est placé en parallèle sur les entrées (42,43) du circuit de commande (4) entre le distributeur à tiroir (41) et les différents éléments (44,45;45,46) reliant lesdites entrées (42,43) audit distributeur à tiroir (41).
